# FASCICULE DE BREVET EUROPEEN

(11) **EP 2 735 196 B1**
(45) Date de publication et mention de la délivrance du brevet: **26.04.2023**
(21) Numéro de dépôt: 12738524.3
(22) Date de dépôt: 25.06.2012
(51) Int. Cl.: H04W 48/04, H04L 9/40, H04W 12/126, H04W 8/18, H04W 48/02

(54) **PROCÉDÉ D'INHIBITION D'UNE COMMUNICATION D'UN ÉQUIPEMENT AVEC UN RÉSEAU**
VERFAHREN ZUR HEMMUNG DER KOMMUNIKATION ZWISCHEN EINER VORRICHTUNG UND EINEM NETZWERK
METHOD FOR INHIBITING COMMUNICATION BETWEEN A DEVICE AND A NETWORK

(30) Priorité: 27.06.2011 FR 1155689
(43) Date de publication de la demande: 28.05.2014
(73) Titulaire: Orange, 92130 Issy-les-Moulineaux (FR)
(72) Inventeur: COUDOUX, Aurélie, F-14320 Fontenay Le Marmion (FR); ALIX, Cyril, F-14220 Thury Harcourt (FR)
(86) Numéro de dépôt international: PCT/FR2012/051446
(87) Numéro de publication internationale: WO 2013/001220

(56) Documents cités:
- EP-A1- 1 739 990
- EP-A1- 1 796 421
- WO-A1-00/18156

## Description

### Domaine technique

L'invention se rapporte de manière générale aux communications et plus précisément aux radiocommunications entre un équipement et un réseau, en particulier à un procédé d'inhibition d'une communication d'un équipement avec un réseau.

L'invention s'applique plus particulièrement à un équipement mobile apte à se déplacer dans un réseau cellulaire

L'équipement en question est un équipement mobile équipé de ressources physiques et logicielles incluant un module d'identité d'abonné. Par module d'identité d'abonné, on entend un module physique ou logiciel d'un abonné du réseau lui permettant de communiquer sur ce réseau. A cet effet, le module d'identité d'abonné mémorise au moins un identificateur apte à identifier l'abonné de manière univoque. Le module d'identité d'abonné est illustré par la suite dans l'exemple de réalisation par une carte de type SIM (de l'anglais *Subscriber Identification Module*) ou USIM (de l'anglais *Universal Subscriber Identification Module.*

### Etat de la technique

Un réseau mobile de radiocommunication cellulaire, notamment selon le standard GSM (de l'anglais *Global System for Mobile communications),* utilise des technologies radio pour permettre à un équipement mobile d'un abonné d'établir une communication avec d'autres équipements mobiles connectés au réseau. La liaison radio entre l'équipement et un réseau mobile doit être de qualité suffisante, ce qui nécessite la mise en place dans le réseau d'un ensemble de stations intermédiaires, dites stations de base, ou BTS (de l'anglais *Base Transceiver Station*), sur l'ensemble du territoire visé. Une cellule est ainsi la surface sur laquelle le téléphone mobile peut établir une liaison avec une station de base déterminée.

La mobilité des abonnés dans un réseau mobile suppose de savoir dans quelle cellule se trouve l'abonné. A cette fin, l'équipement de l'abonné s'identifie sur le réseau au moyen d'une procédure d'authentification qui renseigne également le réseau sur sa localisation. Le réseau peut alors accepter ou refuser la communication. Ainsi le réseau peut-il restreindre la communication d'un équipement mobile à un ensemble de cellules. Une telle restriction est nécessaire lorsque l'abonné dispose, par exemple, de droits de communiquer uniquement dans une zone géographique limitée.

Mais il serait souhaitable que le terminal lui-même puisse restreindre ses communications à un ensemble de cellules sans intervention du réseau, et notamment sans le surcharger par des procédures de localisation et d'authentification lourdes et parfois inutiles.

Le réseau peut également, dans le cas extrême d'une perte ou d'un vol par exemple, bloquer l'équipement mobile. Cette procédure se fait sous le contrôle d'un opérateur du réseau. Elle n'est pas simplement réversible dans la mesure où l'abonné dont l'équipement mobile a été bloqué doit recontacter l'opérateur pour en retrouver l'usage. Or il serait souhaitable, par exemple si l'abonné a retrouvé l'équipement qu'il avait égaré, qu'il puisse s'affranchir du réseau et de son opérateur. La publication WO00/18156 (Telia AB) du 30 mars 2000 montre un procédé dans lequel des informations de positionnement sont gardées dans la carte SIM. On compare cette information avec l'information de position actuelle de l'équipement pour déterminer si l'usager a le droit de communiquer avec le réseau dans cette position.

L'invention offre une solution ne présentant pas les inconvénients de l'état de la technique.

### L'invention

A cet effet, selon un aspect fonctionnel, l'invention a pour objet un procédé d'inhibition d'une communication d'un réseau de communications avec un équipement comportant au moins un identificateur d'abonné apte à être émis vers le réseau à des fins de vérification d'un droit de communiquer sur le réseau, caractérisé en ce qu'il comporte les étapes suivantes :
- Obtention d'une première information de positionnement liée à l'équipement ;
- Obtention d'une première information dite de positionnement de l'équipement, représentative de sa localisation géographique, de sa localisation temporelle, ou l'appartenance à un groupe autorisé sur ce réseau;
- Comparaison de la première information de positionnement avec au moins une deuxième information de positionnement ;
- Modification de tout ou partie des identificateurs d'abonné à émettre pour la vérification, en fonction des résultats de la comparaison.

Ainsi, l'invention offre l'avantage de ne pas imposer au réseau la gestion de l'inhibition de l'équipement, puisque c'est un identificateur même de l'équipement qui est modifié dans le but d'interdire sa reconnaissance par le réseau, et par là l'établissement d'une communication. Le réseau est ainsi avantageusement déchargé de tâches qui peuvent s'avérer lourdes et inutiles. Si l'identité n'est pas correcte, l'abonné dont l'équipement est inhibé ne peut plus établir de communication avec un autre abonné du réseau mobile via le réseau. L'identité vérifiée peut être celle de l'abonné, ou celle de tout ou partie de l'équipement.

Selon un mode de mise en oeuvre particulier de l'invention, la modification est réversible.

De cette façon, cette inhibition est avantageusement temporaire. Ainsi, selon ce mode, la communication peut être rétablie par exemple, en référence à l'étape de comparaison, dès qu'une condition relative à l'information de positionnement se trouve remplie de nouveau. Ainsi l'abonné peut-il s'affranchir de l'opérateur de son réseau pour retrouver l'usage de son équipement.

Selon un second mode de mise en oeuvre particulier de l'invention, un équipement tel que décrit ci-dessus est un terminal mobile équipé d'un module d'identité d'abonné sur laquelle s'exécute le procédé.
Ainsi, avantageusement, une utilisation frauduleuse du module d'identité d'abonné, par exemple une carte de type SIM (de l'anglais *Subscriber Identification Module*) ou USIM (de l'anglais *Universal Subscriber Identification Module*), n'est pas possible selon ce mode de mise en oeuvre de l'invention. Il est connu, selon l'état de la technique, de bloquer l'équipement en cas de vol. Mais un tel blocage n'empêche en rien la subtilisation du module d'identité d'abonné et sa réinsertion réussie dans un autre équipement. Au contraire, dans le cadre de l'invention, le procédé s'exécutant sur le module d'identité d'abonné lui-même, l'inhibition reste effective même si le module d'identité d'abonné est inséré dans un autre équipement. De plus, l'invention ne bloque pas le terminal mobile de l'utilisateur qui peut donc continuer à jouer, écouter de la musique, ou utiliser son mobile pour toute autre fonction indépendante de la communication avec le réseau mobile.

De plus, avantageusement, il est possible d'utiliser les ressources logicielles et matérielles du module d'identité d'abonné pour faciliter la mise en oeuvre du procédé. En particulier dans le contexte de la norme GSM, la recommandation ETSI 11.14 propose un environnement de développement appelé le *SIM Application Toolkit* pour définir sur le module d'identité d'abonné des applications qui peuvent dialoguer avec l'équipement et le réseau. L'utilisation judicieuse de cet environnement permet au procédé de l'invention d'être rapidement développé et facilement téléchargeable sur n'importe quel module d'identité d'abonné selon la norme GSM.

Selon une variante de ce second mode de mise en oeuvre, l'au moins un identificateur d'abonné selon l'invention est son numéro d'identification international.

Cette variante de mise en oeuvre de l'invention permet une utilisation judicieuse du numéro d'identification international de l'abonné (en anglais IMSI pour *International Mobile Subscriber Identity*) qui se trouve mémorisé sur le module d'identité d'abonné par exemple la carte SIM selon la norme GSM. Cet identificateur, transmis au réseau en vue de l'authentification de l'équipement, peut être obtenu facilement puisque mémorisé de manière permanente dans la mémoire du module d'identité d'abonné. Sa modification temporaire conduit de manière simple et transparente pour le réseau à l'inhibition du module d'identité d'abonné et donc de l'équipement. Sa restitution à partir de la mémoire du module d'identification d'abonné rend le procédé très simplement réversible.

Selon une seconde variante de ce second mode de mise en oeuvre, qui pourra être mis en oeuvre alternativement ou cumulativement avec la précédente, l'au moins un identificateur d'abonné est le numéro d'identification temporaire de l'abonné.

Cette variante de mise en oeuvre de l'invention permet d'assurer l'inhibition de l'équipement dans le cas ou l'identificateur temporaire attribué par le réseau à l'équipement (en anglais TMSI pour *Temporary Mobile Subscriber Identity*) est utilisé pour remplacer l'identificateur international d'abonné (IMSI). Cette procédure de remplacement est utilisée par la norme GSM pour éviter une interception et une utilisation frauduleuse de l'IMSI. Cet identificateur temporaire est également mémorisé sur le module d'identité d'abonné selon la norme GSM. Sa modification remplit avantageusement les mêmes fonctions que la modification de l'IMSI discutée auparavant.

Selon un troisième mode de mise en oeuvre particulier de l'invention, qui pourra être mis en oeuvre alternativement ou cumulativement avec les précédents, un procédé tel que décrit plus haut est en outre caractérisé en ce que la première information de positionnement est une localisation géographique.

Ce mode de mise en oeuvre de l'invention permet d'inhiber avantageusement l'équipement dès qu'il sort d'une certaine zone géographique. Dans un système cellulaire, tel que défini par exemple par la norme GSM, une information relative à la localisation du mobile est disponible sur requête de l'équipement vers sa station de base (BTS). Le procédé de l'invention compare cet identificateur de localisation à un ensemble d'informations de localisation, et peut décider ou non, selon le résultat de la comparaison, de modifier un identificateur d'abonné dans le but d'inhiber l'équipement. Notamment, si la cellule à laquelle se rattache l'équipement ne se trouve pas dans un ensemble de zones géographiques, ou cellules autorisées, elle sera inhibée jusqu'à ce qu'elle revienne dans une zone autorisée.

Selon encore un autre mode de mise en oeuvre particulier de l'invention, qui pourra être mis en oeuvre alternativement ou cumulativement avec les précédents, un procédé tel que décrit plus haut est en outre caractérisé en ce que la première information de positionnement est une localisation temporelle.

Ce mode de mise en oeuvre de l'invention permet d'inhiber avantageusement l'équipement dès qu'il sort d'une certaine plage horaire. Le procédé de l'invention compare l'heure courante, qui peut être récupérée facilement sur l'équipement, à un ensemble d'informations temporelles, et peut décider ou non, selon le résultat de la comparaison, de modifier un identificateur d'abonné dans le but d'inhiber l'équipement. Ainsi, si l'équipement ne se trouve pas dans une plage horaire autorisée, par exemple après l'heure du coucher pour un enfant, il sera inhibé jusqu'à la prochaine plage horaire autorisée.

Selon encore un autre mode de mise en oeuvre particulier de l'invention, qui pourra être mis en oeuvre alternativement ou cumulativement avec les précédents, un procédé tel que décrit plus haut est en outre caractérisé en ce que la première information de positionnement est une appartenance à un groupe.

Ce mode de mise en oeuvre de l'invention permet d'inhiber avantageusement l'équipement s'il n'est pas autorisé par un opérateur. Le procédé de l'invention compare un identificateur du terminal auquel il est attaché, par exemple son IMEI (de l'anglais *International Mobile Equipment Identity*)*,* qui permet d'identifier un terminal mobile de manière unique, indépendamment d'un module d'identification d'abonné SIM, à un ensemble de terminaux autorisés par l'opérateur. Le procédé peut décider ou non, selon le résultat de la comparaison, de modifier un identificateur d'abonné, par exemple l'IMSI ou le TMSI, dans le but d'inhiber l'équipement. Ainsi, si le terminal dans lequel a été inséré le module d'identification d'abonné est interdit auprès de l'opérateur, il sera inhibé.

Selon encore un autre mode de mise en oeuvre particulier de l'invention, qui pourra être mis en oeuvre alternativement ou cumulativement avec les précédents, la deuxième information de positionnement est mémorisée dans le module d'identité d'abonné.

Ce mode de mise en oeuvre offre l'avantage de pouvoir facilement modifier l'ensemble des positionnements, par exemple les localisations géographiques, autorisés pour l'équipement. Le protocole SMS (de l'anglais Short Message Service) défini par la norme GSM dans ses recommandations ETSI 3.40 et 3.48, permet notamment aux applications du module d'identité d'abonné SIM de dialoguer avec le terminal et le réseau à l'aide du service de messages courts. Dans le cadre de l'invention, il est ainsi possible de remettre à jour facilement sur la carte SIM, par envoi d'un SMS vers l'équipement, l'ensemble des informations de positionnement autorisées, par exemple une liste de stations de base dans les cellules desquelles peut évoluer l'équipement. Ainsi l'étape de comparaison du procédé peut-elle s'effectuer sur la carte SIM, sans avoir recours au terminal mobile ou au réseau.

Selon un aspect matériel, l'invention concerne également un module d'identification d'abonné comprenant des moyens de transmission d'au moins un identificateur d'un abonné à des fins de vérification d'un droit d'un équipement de communiquer sur le réseau, caractérisé en ce qu'il comporte :
- Des moyens de réception d'une première information dite de positionnement de l'équipement, représentative de sa localisation géographique, de sa localisation temporelle, ou l'appartenance à un groupe autorisé sur ce réseau;
- Des moyens de comparaison de la première information de positionnement avec au moins une deuxième information de positionnement ;
- Des moyens de modification de tout ou partie des identificateurs d'abonné à émettre pour la vérification, en fonction des résultats de la comparaison.

Selon un autre aspect matériel, l'invention concerne également un équipement apte à communiquer avec un réseau, caractérisé en ce qu'il comprend un module tel que défini ci-dessus et en ce qu'il comprend un terminal couplé au module.

Dans un des exemples de réalisation décrits ci-après, le terminal transmettra au module d'identification d'abonné la première information de positionnement visée dans le procédé de l'invention.

Selon un autre aspect matériel, l'invention concerne encore un programme d'ordinateur apte à être mis en oeuvre sur le module d'identité d'abonné tel que décrit ci-dessus, le programme comprenant des instructions de code qui, lorsque le programme est exécuté par un processeur, réalisent les étapes du procédé décrit ci-dessus.

L'invention sera mieux comprise à la lecture de la description qui suit, donnée à titre d'exemple et faite en référence aux dessins annexés.

### Les figures:

La figure 1 représente un réseau mobile de radiocommunications cellulaire selon l'état de la technique.
La figure 2 représente une architecture d'un équipement équipé d'un module d'identité d'abonné, apte à mettre en oeuvre un mode de réalisation préféré de l'invention.
La figure 3 représente une procédure d'identification entre un équipement mobile et le réseau mobile selon l'état de la technique.
La figure 4 représente une procédure d'identification entre un téléphone mobile et le réseau selon le mode de réalisation préféré de l'invention.

### Description détaillée d'un exemple de réalisation illustrant l'invention

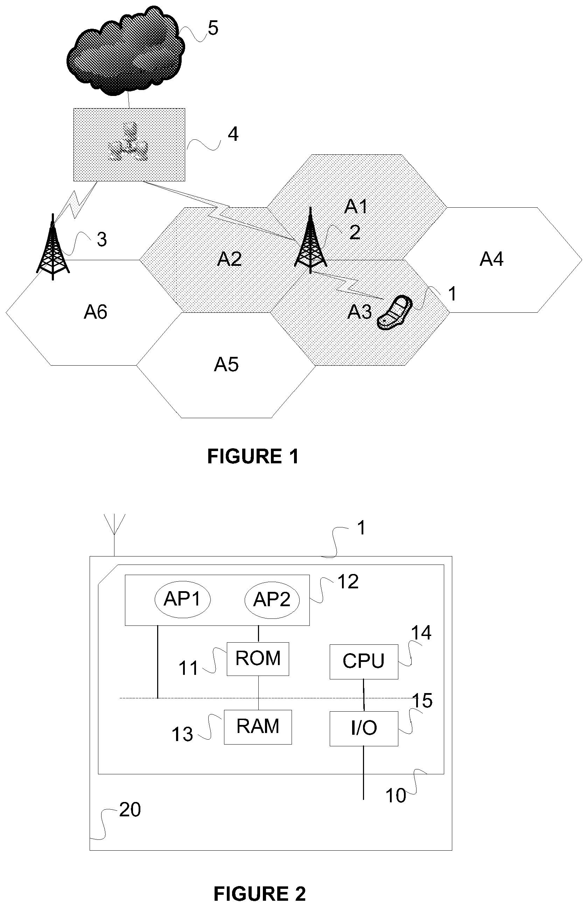

La figure 1 représente un système comprenant un réseau mobile de radiocommunications cellulaire, par exemple de type GSM, selon l'état de la technique et un équipement (1).

Naturellement, l'invention n'est pas limitée à ce type de réseau et s'applique aussi à des réseaux mobiles dits de troisième génération, ou tout autre type de réseau de radiocommunication.

Dans notre exemple, l'équipement 1 est mobile. Il est classiquement composé d'un module d'identité d'abonné sous la forme d'une carte SIM (d'après l'anglais *Subscriber Identification Module*), permettant d'identifier l'usager de façon unique et d'un terminal mobile, c'est-à-dire l'appareil de l'abonné. Comme il sera décrit plus précisément à l'appui de la figure 2, la carte SIM contient les données de l'abonné ainsi qu'un processus d'authentification de l'abonné par le réseau. Selon la norme GSM, un équipement dépourvu de module d'identité d'abonné ne peut donc communiquer avec le réseau, à l'exception des communications d'urgence.

Naturellement, aucune limitation n'est attachée au type de terminal utilisé, ni à la définition d'un équipement. Le terminal mobile peut être par exemple un téléphone mobile, une tablette, un compteur électrique... ou tout autre moyen de communication, fixe ou mobile, apte à permettre une communication entre l'équipement et le réseau mobile. L'équipement peut notamment se limiter au seul module d'identité d'abonné (par exemple une carte SIM). L'équipement peut aussi se limiter au terminal mobile et le module d'identification d'abonné être réduit à un programme logiciel s'exécutant sur ce terminal. Dans la suite, on entend par équipement l'ensemble constitué du terminal, fixe ou mobile, et de son module d'identité d'abonné.

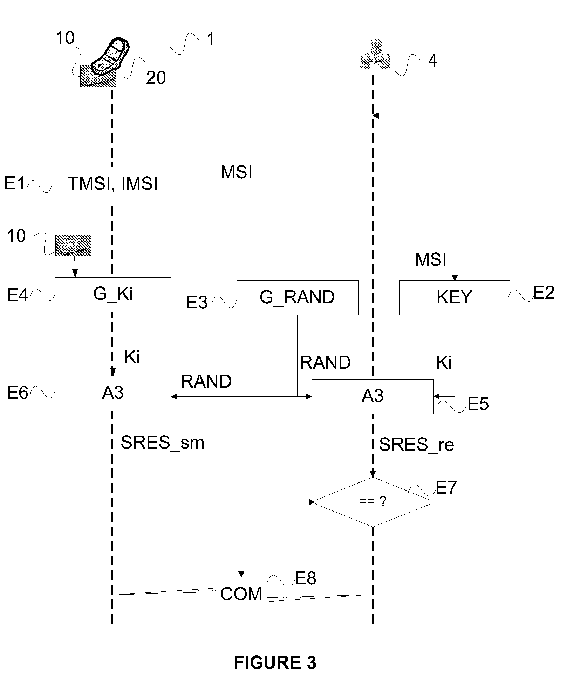

Afin d'établir une communication avec le réseau 5, l'équipement mobile 1 doit s'identifier auprès des équipements 4 du réseau et de l'opérateur de réseau au cours d'une procédure qui sera détaillée ultérieurement à l'appui de la figure 3.

Dans notre exemple, La communication entre l'équipement 1 et une station de base 2 se fait par l'intermédiaire d'un lien radio. Cette liaison radio entre l'équipement et la station de base doit être de qualité suffisante, ce qui nécessite la mise en place d'un ensemble de stations de base, aussi appelées BTS (de l'anglais *Base Transceiver Station*) sur l'ensemble du territoire visé. Ainsi sur la figure 1, le terminal 1 communique-t-il avec la station de base 2 qui se trouve géographiquement la plus proche de lui. De manière plus générale, tout équipement mobile ou fixe qui se trouve dans les zones A1, A2 ou A3 peut communiquer avec la station de base 2. L'ensemble des zones A1, A2 et A3 constitue ce que l'on appelle la cellule de la station de base, identifiée de manière unique par son identificateur (BTS_ID). En revanche, un équipement qui se trouverait dans l'une des zones A4, A5 ou A6 se trouve trop éloignée de la BTS 2 pour pouvoir communiquer avec elle.

L'ensemble des stations de base (2,3) d'un réseau cellulaire est relié aux équipements du réseau et d'un opérateur de réseau (4). Notamment, chaque station de base est liée à un contrôleur de stations (BSC, de l'anglais *Base Station Controllet*) lui-même relié à un ensemble de dispositifs appelé le soussystème réseau (en anglais NSS pour *Network Station Subsystem)* qui est chargé de gérer les identités des utilisateurs, leur localisation et l'établissement de la communication avec les autres abonnés, et les relie au réseau 5. Ce réseau 5 peut être un réseau téléphonique public et/ou un réseau Internet.

Nous allons maintenant décrire, à l'appui de la figure 2, l'architecture de l'équipement 1 introduit en figure 1, apte à mettre en oeuvre une communication de type GSM et un mode de réalisation de l'invention. L'équipement 1 est classiquement constitué, selon la norme GSM, d'un téléphone mobile 20 équipé d'un module d'identité d'abonné 10, par exemple une carte SIM. La carte SIM 10 a pour fonction de stocker les informations spécifiques à l'abonné et les processus qui permettent à l'équipement de s'authentifier sur le réseau. La carte SIM 10 possède trois types de mémoires articulées autour d'un processeur (CPU) 14. La ROM 11 (de l'anglais *Read Only Memory*) contient notamment le système d'exploitation du module d'identité d'abonné et des programmes implémentant les mécanismes de sécurité, entre autres l'algorithme A3 d'authentification qui sera décrit plus tard à l'appui de la figure 3. L'EEPROM 12 (de l'anglais *Electrically Erasable Programmable Read Only Memory*) contient de manière permanente des répertoires et données définis par la norme GSM, notamment l'IMSI (de l'anglais *International Mobile Subscriber Identity*) qui est le numéro d'identification unique du module d'identité d'abonné et la clé d'authentification Ki, ainsi que des applications spécifiques (AP1,AP2) appelées *applets.* Les applets sont des programmes logiciels spécifiées via le *SIM Application Toolkit* selon la recommandation ETSI 11.14, qui permettent de contrôler certaines fonctions du téléphone mobile, par exemple de dialoguer avec l'abonné via l'interface 15 de communication entre le module d'identité d'abonné SIM 10 et le téléphone mobile 20, normalisée par l'ETSI sous le numéro 11.11. Sur la figure 2 sont représentés deux applets : l'AP1 est par exemple une application de messages courts (SMS de l'anglais *Short Message Service*) et l'applet AP2, ou applet d'inhibition, implémente le procédé selon ce mode de réalisation de l'invention. La RAM 13 (de l'anglais Random Access Memory) permet notamment d'effectuer des calculs ou de charger des instructions de programme relatives par exemple aux applets AP1 et AP2 et de les exécuter sous le contrôle du processeur 14.

A l'appui de la figure 3, on décrit maintenant une procédure d'identification, plus particulièrement une procédure d'authentification, selon l'état de l'art entre un équipement mobile 1 et les équipements du réseau et de l'opérateur 4 introduits auparavant à l'appui de la figure 1. Dans cet exemple de réalisation, on rappelle que l'équipement 1 est constituée d'un téléphone mobile 20 équipé d'un module d'identité d'abonné SIM 10. Le module d'identité d'abonné SIM, comme mentionné auparavant, contient classiquement un identificateur IMSI (*International Mobile Subscriber Identity*) et aussi, lorsque l'équipement est allumé, un identificateur TMSI *(Temporary Mobile Subscriber Identity*) qui permet notamment d'identifier un utilisateur de manière temporaire lors des interactions entre l'équipement mobile et le réseau. Lorsque l'équipement dispose d'un TMSI, l'IMSI ne sera plus utilisé, pour éviter qu'il soit écouté sur l'interface radio et utilisé à des fins malhonnêtes.

On suppose que l'équipement, au début de l'algorithme, cherche à se faire identifier, ou authentifier, par le réseau, par exemple parce qu'il souhaite initier une communication.

L'équipement émet vers le réseau, lors d'une étape E1, son identificateur temporaire TMSI ou son identificateur international IMSI. L'équipement commence par transmettre le TMSI s'il en dispose. Si le réseau ne reconnaît pas le TMSI, ou si l'équipement ne dispose pas du TMSI, il transmet son identificateur IMSI. A la fin de cette étape, l'équipement a donc transmis au réseau soit l'IMSI, soit le TMSI. Dans la suite, on réfère indifféremment à l'un ou l'autre de ces identificateurs sous l'appellation générique de MSI.

On entre alors dans une étape E2 au cours de laquelle le réseau détermine la clé Ki d'authentification spécifique à chaque abonné. Il existe différentes variantes de calcul selon la nature du réseau et la norme supportée, mais dans tous les cas la clé Ki est calculée ou retrouvée par le réseau à l'aide de l'identificateur MSI (TMSI ou IMSI), une opération que l'on peut exprimer sous la forme plus compacte : Ki = f(MSI).

Lors de l'étape E3 qui lui est consécutive, précédente ou simultanée, le réseau génère un nombre aléatoire (RAND) qui est transmis à l'équipement.

L'équipement extrait, de son côté, lors d'une étape E4, la clé Ki qui lui est nécessaire pour l'authentification. Cette clé est stockée dans la mémoire EEPROM 12 du module d'identité d'abonné SIM, comme décrit en figure 2.

Puis, lors de deux étapes similaires respectivement notées E5 du côté du réseau et E6 du côté de l'équipement, on exécute l'algorithme dit « A3 » de la norme GSM. L'algorithme A3 fournit un nombre SRES (de l'anglais *Signed RESponse calculated by a SIM card*) à partir des entrées RAND et Ki. L'étape E6 calcule pour le mobile un nombre SRES_sm et l'étape E5 un nombre SRES_re pour le réseau. L'équipement 1 transmet au réseau le résultat SRES_sm.

Enfin, au cours d'une étape E7, le réseau compare les deux nombres générés par l'algorithme A3, sRES_re et sRES_sm. En cas d'égalité, l'authentification de l'équipement est réussie et ce dernier peut communiquer avec le réseau à partir de l'étape E8, c'est-à-dire par exemple transmettre ou recevoir des données ou de la voix vers ou en provenance d'un autre équipement. Dans le cas contraire, l'authentification de l'équipement a échoué. Une nouvelle phase d'authentification pourra être engagée en revenant à l'étape E1 et en décrivant de nouveau les étapes E1 à E7.

Ainsi, pour que le réseau puisse identifier l'équipement selon l'état de l'art, il apparait clairement qu'il a besoin de connaître l'identificateur MSI (TMSI ou IMSI), afin d'obtenir la clé Ki et exécuter correctement l'algorithme A3, assurant ainsi le succès de l'authentification. Selon l'état de la technique, si l'équipement (1) est volé, ou simplement son module d'identité d'abonné (SIM,10) en vue de son insertion dans un autre équipement, un établissement de la communication avec le réseau, et donc une utilisation frauduleuse du module d'identité d'abonné, reste possible. Le principe du mode de réalisation de l'invention qui va maintenant être décrit est donc de modifier, ou corrompre, les identificateurs TMSI et IMSI afin que le réseau ne puisse restituer la clé Ki et échoue de ce fait dans sa procédure d'authentification.

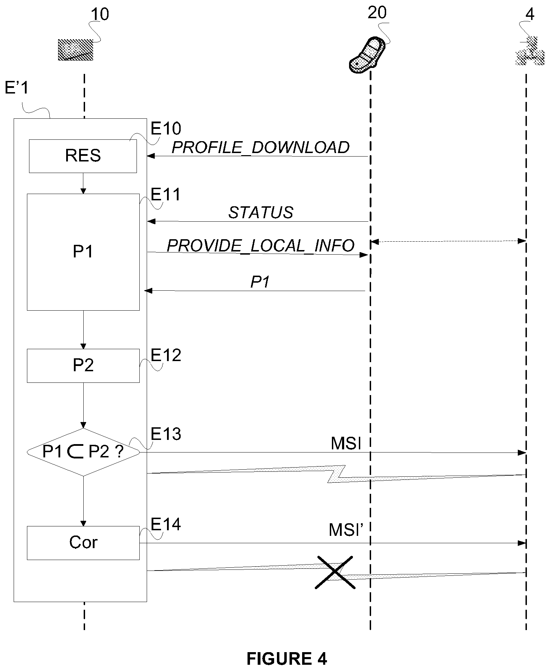

La figure 4 représente une procédure d'authentification, ou d'identification, entre un équipement constitué d'un terminal mobile 20 et d'un module d'identification d'abonné 10, et les équipements de réseau 4 selon un mode de réalisation de l'invention. Les étapes principales de la procédure d'authentification décrite à la figure 3 à l'appui des étapes E2 à E7 restant inchangées, on a représenté ici uniquement une étape E'1 de génération de l'identificateur d'abonné MSI ou MSI' selon ce mode de réalisation, destinée à remplacer l'étape E1 de l'état de l'art de la figure 3 et décomposée en sousétapes E10 à E14. Le principe de base est de corrompe le MSI (IMSI ou TMSI) que l'équipement transmet au réseau, afin que ce dernier soit dans l'incapacité de retrouver la clé Ki correspondante et que l'authentification échoue de ce fait dans le cas où l'équipement mobile ne serait pas dans une zone géographique autorisée. Le programme, ou *applet,* d'inhibition AP2 qui s'exécute sur le module d'identité d'abonné SIM 10, comme décrit à l'appui de la figure 2, utilise à cette fin des outils spécifiés par le *SIM Application Toolkit* conformément à la recommandation ETSI 11.14 de la norme GSM pour communiquer avec le terminal mobile via un ensemble de messages comportant des commandes et des données. Par exemple, la commande *PROFILE_DOWNLOAD* permet au terminal mobile de renseigner le module d'identité d'abonné sur ses capacités. Dans ce mode de réalisation, le module d'identité d'abonné SIM est proactif, c'est-à-dire qu'il peut initier des échanges avec le réseau en envoyant des commandes au terminal mobile, à l'inverse des modules d'identité d'abonné de première génération qui sont uniquement passifs.

Lors d'une étape E10 initiale, qui a généralement lieu lors de la mise sous tension de la l'équipement 1, le programme (*applet*) d'inhibition AP2 est déclenché par le message *PROFILE_DOWNLOAD* transmis du terminal au module d'identité d'abonné. Une restauration de l'identificateur IMSI est tout d'abord effectuée par l'applet depuis l'EEPROM 13 du module d'identité d'abonné SIM. En effet, si l'IMSI a été corrompu lors d'une exécution préalable du procédé de ce mode de réalisation de l'invention, il est important de le restituer pour assurer un fonctionnement correct de l'équipement.

Après cette étape E10, le mobile envoie périodiquement au module d'identité d'abonné SIM une commande *STATUS* pour s'enquérir de son état. Lors de l'étape E11, *l'applet* AP2 est ainsi activée de manière périodique par la réception de cet événement *STATUS.* L'applet récupère une information de positionnement du mobile en émettant à destination du terminal mobile une commande *PROVIDE_LOCAL_INFORMATION.* En retour, le terminal lui transmet les informations P1 de localisation de l'équipement, qui contiennent par exemple l'identification du pays, du réseau, de la zone et de la station de base (BTS) dans lesquels se trouve l'équipement. Le terminal peut avoir ou non interrogé le réseau pour disposer de ces informations.

Quand l'applet AP2 a reçu et mémorisé ces informations, elle lit lors d'une étape E12 les informations de localisation P2, qui sont stockées selon ce mode de réalisation dans la SIM, par exemple dans un fichier. Ces informations P2 peuvent prendre la forme d'une liste de cellules autorisées dans une zone, un réseau et un pays donnés. Elles peuvent être modifiées à tout moment, par exemple par un message de type SMS (de l'anglais *Short Message Service)* en provenance du réseau. Le protocole SMS défini par la norme GSM dans ses recommandations ETSI 3.40 et 3.48, permet en effet aux applications du module d'identité d'abonné de dialoguer avec l'équipement terminal et le réseau à l'aide du service de messages courts.

L*'applet* effectue à l'étape E13 une comparaison entre les informations de positionnement locales P1 obtenues à l'étape E11 et ces informations de positionnement autorisées P2 obtenues à l'étape E12. Si l'étape E13 est réussie, c'est-à-dire si une correspondance a été trouvée entre les deux informations de positionnement P1 et P2, alors l'équipement est autorisé dans cette zone et l*'applet* laisse le terminal mobile s'authentifier sur le réseau en transmettant son identificateur MSI (IMSI ou TMSI) conformément à l'état de l'art décrit à l'appui de la figure 3.

Si, en revanche, aucune correspondance n'a été trouvée lors de la comparaison entre P1 et P2, l'applet corrompt les informations nécessaires à cette authentification (IMSI, TMSI) au cours d'une étape E14 qui aboutit à l'émission d'un identificateur MSI' modifié. Une telle modification peut par exemple prendre la forme d'une mise à une valeur prédéterminée du MSI (MSI' = 0), ou à une opération quelconque sur l'identificateur MSI (TMSI ou IMSI) aboutissant à un identificateur modifié MSI' fonction du MSI selon une fonction quelconque f2 (MSI'=f2(MSI)). Le réseau ne peut retrouver la clé Ki à partir de l'identificateur modifié MSI', c'est-à-dire qu'il ne peut effectuer l'opération Ki = f(MSI) de l'étape E2 de la figure 3 et n'authentifie pas l'équipement mobile qui ne peut donc communiquer.

Dans ce mode de réalisation, cette opération est réversible. En effet, l'utilisateur dont l'équipement a été inhibé peut par la suite éteindre puis rallumer l'équipement mobile quand il se trouve dans une zone autorisée pour effectuer de nouveau les étapes E'1 à E7 et rétablir une communication.

En variante, les informations P1 et P2 de positionnement peuvent correspondre à des informations temporelles, par exemple des plages horaires autorisées. Ainsi, P2 pourra par exemple contenir les plages 10h-12h et 18h-20h permettant d'inhiber la communication si l'information P1 d'heure courante de l'équipement n'appartient pas à l'une de ces deux plages horaires.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

Par exemple, selon une variante, l'étape E'1 peut être complétée d'une sous-étape supplémentaire de modification d'un identifiant indiquant à quel opérateur de réseau (4) la station est autorisée à se connecter. Par exemple l'identifiant FPLMN (de l'anglais *Forbidden Public Land Mobile Network*) de la norme GSM indique à quel réseau un équipement mobile n'est pas autorisé à se connecter. Une modification de cette donnée constitue une sécurité complémentaire par rapport à celle consistant à modifier uniquement un ou des identificateurs de la carte d'identité d'abonné (IMSI, TMSI), comme exposé dans la description précédente. Naturellement, cette donnée FPLMN devra être restaurée après la mise sous tension de l'équipement, de la même manière que les autres identificateurs (TMSI, IMSI) qui ont été possiblement modifiés.

La modification des données d'identification dans le but d'inhiber un équipement peut aussi intervenir lorsqu'un utilisateur d'un équipement tente d'utiliser un module d'identification d'abonné sur un terminal mobile qui n'est pas autorisé par l'opérateur (4). Selon un tel mode de réalisation, le terminal mobile de l'équipement comporte un IMEI (de l'anglais *International Mobile Equipment Identity*) qui permet de l'identifier de manière unique, indépendamment d'un module d'identification d'abonné SIM. Si l'IMEI du terminal n'est pas reconnu par l'opérateur du réseau (4), c'est-à-dire si ce terminal n'est pas autorisé sur ce réseau, la mise en oeuvre de la sous-étape E14 de l'étape E'1 de la figure 4 permettra de modifier, ou corrompre, l'un au moins des identificateurs (MSI', FPMLN) de manière à ce que le terminal ne puisse communiquer sur le réseau de cet opérateur.

## Revendications

1. Procédé d'inhibition d'une communication d'un réseau de communications (5) avec un équipement (1) comportant au moins un identificateur d'abonné (MSI) apte à être émis vers le réseau à des fins de vérification d'un droit de communiquer sur le réseau, **caractérisé en ce qu'**il comporte les étapes suivantes :
- Obtention (E11) d'une première information dite de positionnement (P1) de l'équipement (1), représentative de sa localisation géographique, de sa localisation temporelle, ou l'appartenance à un groupe autorisé sur ce réseau;
- Comparaison (E13) de la première information de positionnement (P1) avec au moins une deuxième information de positionnement (P2);
- Modification (E14) de tout ou partie des identificateurs d'abonné (MSI, MSI') à émettre pour la vérification, en fonction des résultats de la comparaison.

2. Procédé d'inhibition selon la revendication 1, **caractérisé en ce que** la modification est réversible.

3. Procédé d'inhibition selon la revendication 1, **caractérisé en ce que** l'équipement (1) est un terminal mobile (20) équipé d'un module d'identité d'abonné (SIM, 10) et **en ce que** ledit procédé s'exécute sur le module d'identité d'abonné (SIM, 10).

4. Procédé d'inhibition selon la revendication 3 **caractérisé en ce que** l'au moins un identificateur d'abonné (MSI) est le numéro d'identification international de l'abonné (IMSI).

5. Procédé d'inhibition selon la revendication 3 **caractérisé en ce que** l'au moins un identificateur d'abonné (MSI) est le numéro d'identification temporaire de l'abonné (TMSI).

6. Procédé d'inhibition selon la revendication 1, **caractérisé en ce que** ladite au moins une deuxième information de positionnement (P2) est mémorisée dans le module d'identité d'abonné (SIM,10).

7. Procédé d'inhibition selon la revendication 1, **caractérisé en ce qu'**il comprend l'obtention d'un ensemble d'identificateurs de terminaux autorisés sur ledit réseau de communication.

8. Module d'identification d'abonné (SIM, 10) comprenant des moyens de transmission d'au moins un identificateur d'un abonné (MSI) à des fins de vérification d'un droit d'un équipement de communiquer sur le réseau, **caractérisé en ce qu'**il comporte :
- Des moyens (AP2) de réception d'une première information dite de positionnement (P1) de l'équipement, représentative de sa localisation géographique, de sa localisation temporelle, ou l'appartenance à un groupe autorisé sur ce réseau;
- Des moyens (AP2) de comparaison de la première information de positionnement (P1) avec au moins une deuxième information de positionnement (P2);
- Des moyens (AP2) de modification de tout ou partie des identificateurs d'abonné (MSI, MSI') à émettre pour la vérification, en fonction des résultats de la comparaison.

9. Equipement (1) apte à communiquer avec un réseau, **caractérisé en ce qu'**il comprend un module d'identification d'abonné (SIM, 10) tel que défini dans la revendication 8 et un terminal (20) couplé au module.

10. Programme d'ordinateur (AP2) apte à être mis en oeuvre sur le module d'identité d'abonné (10) tel que défini dans la revendication 8, le programme comprenant des instructions de code qui, lorsque le programme est exécuté par un processeur (CPU, 14), réalisent les étapes du procédé (E'1, E10-E14) selon la revendication 1.

## Patentansprüche

1. Verfahren zur Sperre einer Kommunikation eines Kommunikationsnetzwerks (5) mit einem Gerät (1), das mindestens einen Teilnehmeridentifikator (MSI) aufweist, der zur Überprüfung eines Kommunikationsrechts auf dem Netzwerk zum Netzwerk gesendet werden kann, **dadurch gekennzeichnet, dass** es die folgenden Schritte aufweist:
- Erlangen (E11) einer ersten so genannten Positionierungsinformation (P1) des Geräts (1), die für seine geographische Lokalisierung, seine zeitliche Lokalisierung oder die Zugehörigkeit zu einer auf diesem Netzwerk berechtigten Gruppe repräsentativ ist;
- Vergleich (E13) der ersten Positionierungsinformation (P1) mit mindestens einer zweiten Positionierungsinformation (P2);
- ganz oder teilweise Änderung (E14) der für die Überprüfung zu sendenden Teilnehmeridentifikatoren (MSI, MSI') abhängig von den Ergebnissen des Vergleichs.

2. Sperrverfahren nach Anspruch 1, **dadurch gekennzeichnet, dass** die Änderung umkehrbar ist.

3. Sperrverfahren nach Anspruch 1, **dadurch gekennzeichnet, dass** das Gerät (1) ein mit einem Teilnehmeridentitätsmodul (SIM, 10) ausgestattetes mobiles Endgerät (20) ist, und dass das Verfahren auf dem Teilnehmeridentitätsmodul (SIM, 10) ausgeführt wird.

4. Sperrverfahren nach Anspruch 3, **dadurch gekennzeichnet, dass** der mindestens eine Teilnehmeridentifikator (MSI) die internationale Identifikationsnummer des Teilnehmers (IMSI) ist.

5. Sperrverfahren nach Anspruch 3, **dadurch gekennzeichnet, dass** der mindestens eine Teilnehmeridentifikator (MSI) die temporäre Identifikationsnummer des Teilnehmers (TMSI) ist.

6. Sperrverfahren nach Anspruch 1, **dadurch gekennzeichnet, dass** die mindestens eine zweite Positionierungsinformation (P2) im Teilnehmeridentitätsmodul (SIM, 10) gespeichert wird.

7. Sperrverfahren nach Anspruch 1, **dadurch gekennzeichnet, dass** es die Erlangung einer Einheit von Identifikatoren von berechtigten Endgeräten auf dem Kommunikationsnetzwerk enthält.

8. Teilnehmeridentifikationsmodul (SIM, 10), das Übertragungseinrichtungen mindestens eines Identifikators eines Teilnehmers (MSI) zum Zweck der Überprüfung eines Rechts eines Geräts zur Kommunikation auf dem Netzwerk enthält, **dadurch gekennzeichnet, dass** es aufweist:
- Einrichtungen (AP2) zum Empfang einer ersten so genannten Positionierungsinformation (P1) des Geräts, die für seine geographische Lokalisierung, seine zeitliche Lokalisierung oder die Zugehörigkeit zu einer berechtigten Gruppe auf diesem Netzwerk repräsentativ ist;
- Einrichtungen (AP2) zum Vergleich der ersten Positionierungsinformation (P1) mit mindestens einer zweiten Positionierungsinformation (P2);
- Einrichtungen (AP2) zur ganz oder teilweisen Änderung der für die Überprüfung zu sendenden Teilnehmeridentifikatoren (MSI, MSI') abhängig von den Ergebnissen des Vergleichs.

9. Gerät (1), das fähig ist, mit einem Netzwerk zu kommunizieren, **dadurch gekennzeichnet, dass** es ein Teilnehmeridentifikationsmodul (SIM, 10) wie in Anspruch 8 definiert und ein mit dem Modul verbundenes Endgerät (20) enthält.

10. Computerprogramm (AP2), das fähig ist, auf dem Teilnehmeridentitätsmodul (10) wie in Anspruch 8 definiert durchgeführt zu werden, wobei das Programm Codeanweisungen enthält, die, wenn das Programm von einem Prozessor (CPU, 14) ausgeführt wird, die Schritte des Verfahrens (E'1, E10-E14) nach Anspruch 1 realisieren.

## Claims

1. Method for inhibiting communication of a communication network (5) with an equipment (1) comprising at least one subscriber identifier (MSI) able to be transmitted to the network for the purpose of verifying a right to communicate on the network, **characterized in that** it comprises the following steps:
- obtaining (E11) a first item of information, called positioning information (P1), from the equipment (1), representative of its geographical location, of its temporal location, or membership to a group authorized on this network;
- comparing (E13) the first item of positioning information (P1) with at least one second item of positioning information (P2);
- modifying (E14) all or some of the subscriber identifiers (MSI, MSI') to be transmitted for the verification, based on the results of the comparison.

2. Inhibition method according to Claim 1, **characterized in that** the modification is reversible.

3. Inhibition method according to Claim 1, **characterized in that** the equipment (1) is a mobile terminal (20) equipped with a subscriber identity module (SIM, 10) and **in that** said method runs on the subscriber identity module (SIM, 10).

4. Inhibition method according to Claim 3, **characterized in that** the at least one subscriber identifier (MSI) is the international mobile subscriber identity number (IMSI).

5. Inhibition method according to Claim 3, **characterized in that** the at least one subscriber identifier (MSI) is the temporary mobile subscriber identity number (TMSI).

6. Inhibition method according to Claim 1, **characterized in that** said at least one second item of positioning information (P2) is stored in the subscriber identity module (SIM, 10).

7. Inhibition method according to Claim 1, **characterized in that** it comprises obtaining a set of identifiers of terminals authorized on said communication network.

8. Subscriber identity module (SIM, 10) comprising means for transmitting at least one identifier of a subscriber (MSI) for the purpose of verifying a right of an equipment to communicate on the network, **characterized in that** it comprises:
- means (AP2) for receiving a first item of information, called positioning information (P1), from the equipment, representative of its geographical location, of its temporal location, or membership to a group authorized on this network;
- means (AP2) for comparing the first item of positioning information (P1) with at least one second item of positioning information (P2);
- means (AP2) for modifying all or some of the subscriber identifiers (MSI, MSI') to be transmitted for the verification, based on the results of the comparison.

9. Equipment (1) able to communicate with a network, **characterized in that** it comprises a subscriber identity module (SIM, 10) as defined in Claim 8 and a terminal (20) coupled to the module.

10. Computer program (AP2) able to be implemented on the subscriber identity module (10) as defined in Claim 8, the program comprising code instructions that, when the program is executed by a processor (CPU, 14), carry out the steps of the method (E'1, E10-E14) according to Claim 1.
